# EUROPEAN PATENT APPLICATION

(11) **EP 4 368 280 A1**
(43) Date of publication of application: **15.05.2024**
(21) Application number: 22876752.1
(22) Date of filing: 22.09.2022
(51) Int. Cl.: B01D 63/02, B01D 69/08, H01M 8/04119

(54) **HOLLOW FIBER MEMBRANE CARTRIDGE AND HOLLOW FIBER MEMBRANE MODULE INCLUDING SAME**

(30) Priority: 30.09.2021 KR 20210130350
(71) Applicant: Kolon Industries, Inc., Seoul 07793 (KR)
(72) Inventor: AHN, Na Hyun, Seoul 07793 (KR); KIM, Do Woo, Seoul 07793 (KR); KIM, In Ho, Seoul 07793 (KR)
(74) Representative: Ter Meer Steinmeister & Partner
(86) International application number: PCT/KR2022/014166
(87) International publication number: WO 2023/054980

(57) **Abstract**

The present disclosure provides a hollow fiber membrane cartridge capable of preventing fiber breakage of a hollow fiber membrane by uniformly supplying a fluid to the hollow fiber membrane and a hollow fiber membrane module.

The hollow fiber membrane is accommodated in the hollow fiber membrane cartridge according to an embodiment of the present disclosure and allows a first fluid and a second fluid to perform moisture exchange, wherein the first fluid flows inside the hollow fiber membrane, and the second fluid introduced from outside flows outside the hollow fiber membrane, an opening through which the second fluid is introduced or discharged is formed in the hollow fiber membrane cartridge, a first portion into which the second fluid is introduced and a second portion having a greater inflow flow rate of the second fluid per unit area than that of the first portion are formed in the opening, and a width of the second portion is less than a width of the first portion.

## Description

### Technical Field

The present disclosure relates to a hollow fiber membrane cartridge and a hollow fiber membrane module including the same.

### Background Art

A fuel cell is a power generation cell wherein hydrogen is combined with oxygen to generate electricity. Such a fuel cell has advantages in that it is possible to continuously generate electricity as long as hydrogen and oxygen are supplied thereto, unlike a general chemical cell, such as a dry cell or a storage cell, and in that there is no heat loss and thus, the efficiency of the fuel cell is about twice as high as the efficiency of an internal combustion engine.

In addition, the fuel cell directly converts chemical energy generated by combination of hydrogen and oxygen into electrical energy, and thus, the volume of a pollutant that is discharged is small. Consequently, the fuel cell has advantages in that it is environmentally friendly and concerns about depletion of resources due to an increase in energy consumption may be reduced.

Based on the kind of an electrolyte that is used, such a fuel cell may be generally classified as a polymer electrolyte membrane fuel cell (PEMFC), a phosphoric acid fuel cell (PAFC), a molten carbonate fuel cell (MCFC), a solid oxide fuel cell (SOFC), or an alkaline fuel cell (AFC).

These fuel cells operate fundamentally by the same principle, but are different from each other in terms of the kind of fuel that is used, operating temperature, catalyst, and electrolyte. Among these fuel cells, the polymer electrolyte membrane fuel cell is known as being the most favorable to a transportation system as well as small-scale stationary power generation equipment because the polymer electrolyte membrane fuel cell operates at a lower temperature than the other fuel cells and the output density of the polymer electrolyte membrane fuel cell is high, and thus, it is possible to miniaturize the polymer electrolyte membrane fuel cell.

One of the most important factors to improve the performance of the polymer electrolyte membrane fuel cell is to supply a certain amount or more of moisture to a polymer electrolyte membrane or a proton exchange membrane (PEN) of a membrane electrode assembly (MEA) in order to retain moisture content. The reason for this is that, in the case in which the polymer electrolyte membrane becomes dry, power generation efficiency is abruptly reduced.

As methods of humidifying the polymer electrolyte membrane, 1) a bubbler humidification method of filling a pressure-resistant container with water and allowing a target gas to pass through a diffuser in order to supply moisture, 2) a direct injection method of calculating the amount of moisture that is necessary for fuel cell reaction and directly supplying moisture to a gas stream pipe through a solenoid valve, and 3) a humidification membrane method of supplying moisture to a gas fluid bed by using a polymer separation membrane are used.

Among these methods, the humidification membrane method of providing water vapor to a gas that is supplied to the polymer electrolyte membrane by using a membrane configured to selectively transmit only water vapor included in an exhaust gas in order to humidify the polymer electrolyte membrane is advantageous in that it is possible to reduce the weight and size of a humidifier.

The selective permeable membrane used in the humidification membrane method is preferably a hollow fiber membrane having a large permeable area per unit volume when forming a module. That is, in the case in which a membrane humidifier is manufactured by using a hollow fiber membrane, high integration of the hollow fiber membranes having large contact surface area is possible, and thus, it is possible to sufficiently humidify a fuel cell even in the case of a small capacity, it is possible to use a low-priced material, and it is possible to collect moisture and heat included in off-gas discharged from the fuel cell at a high temperature and to reuse the collected moisture and heat through the humidifier.

In the case of the humidifier using the hollow fiber membrane, however, a plurality of hollow fiber membranes is integrated in order to increase the capacity of the humidifier. In this regard, the flow of a gas that flows outside the hollow fiber membranes is not uniform in the entirety of the humidifier due to resistance caused by the highly integrated hollow fiber membranes.

In order to solve this, a hollow fiber membrane module is configured to have a plurality of cartridges mounted in a membrane humidifier housing in order to achieve uniform flow of a gas. That is, a hollow fiber membrane bundle is accommodated in each cartridge, and a plurality of cartridges is mounted in the membrane humidifier housing such that a gas introduced into the membrane humidifier housing flows in the cartridges so that the flow of the gas is uniform.

However, in the conventional hollow fiber membrane module, the flow of a fluid supplied through an opening is concentrated in a part of the hollow fiber membrane, causing a problem in that fiber breakage of the hollow fiber membrane occurs. In addition, because the flow is not uniform, there is a problem in that humidification performance and flow durability are lowered.

### Disclosure

### Technical Problem

The present disclosure solves the above problems and provides a hollow fiber membrane cartridge capable of preventing fiber breakage of a hollow fiber membrane by uniformly supplying a fluid to a hollow fiber membrane and a hollow fiber membrane module.

### Technical Solution

According to an embodiment of the present disclosure, there is provided a hollow fiber membrane cartridge in which a hollow fiber membrane configured to allow a first fluid and a second fluid to perform moisture exchange is accommodated, wherein the first fluid flows inside the hollow fiber membrane, the second fluid introduced from the outside flows outside the hollow fiber membrane, an opening through which the second fluid is introduced or discharged is formed in the hollow fiber membrane cartridge, a first portion into which the second fluid is introduced and a second portion having a greater inflow flow rate of the second fluid per unit area than an inflow flow rate of the first portion are formed in the opening, and a width of the second portion is less than a width of the first portion.

The opening may have a width and a length, and the width of the opening may gradually change.

The opening may be formed such that the width of the opening gradually decreases from one end of the opening to another end thereof in a longitudinal direction.

The opening may be formed such that the width of the opening gradually decreases from a center of the opening to the outside thereof in a longitudinal direction.

The opening may include a portion having a uniform width and a portion having a width that gradually changes.

A plurality of windows may be formed in the opening.

A mesh net may be installed in the opening.

A plurality of openings spaced apart from each other in a width direction of the hollow fiber membrane cartridge may be formed in the hollow fiber membrane cartridge, and at least one of the plurality of openings may be formed in a circular shape or an oval shape.

The opening may include a constant width portion having a width that is uniform and a variable width portion having a width gradually decreasing from the constant width portion to an end of the opening in a longitudinal direction.

The opening may be formed in an atypical shape.

According to an embodiment of the present disclosure, there is provided a hollow fiber membrane module including a housing unit including a first fluid inlet, a first fluid outlet, a second fluid inlet, and a second fluid outlet, and a plurality of hollow fiber membrane cartridges disposed inside the housing unit and in which hollow fiber membranes are accommodated, wherein an opening through which the second fluid is introduced or discharged are formed in each of the plurality of hollow fiber membrane cartridges, a first portion and a second portion having a greater inflow flow rate of the second fluid per unit area than an inflow flow rate of the first portion are formed in the opening, and a width of the second portion is less than a width of the first portion.

The opening may have a width and a length, and the width of the opening may gradually change.

The opening may be formed such that the width of the opening gradually decreases from one end of the opening to another end thereof in a longitudinal direction.

The opening may be formed such that the width of the opening gradually decreases from a center of the opening to the outside thereof in a longitudinal direction.

The opening may include a portion having a uniform width and a portion having a width that gradually changes.

The opening may be formed such that a width of the opening gradually decreases toward the second fluid inlet or the second fluid outlet.

A plurality of openings spaced apart from each other in a width direction of the hollow fiber membrane cartridge may be formed in the hollow fiber membrane cartridge, and at least one of the plurality of openings may be formed in a circular shape or an oval shape.

The opening may include a constant width portion having a width that is uniform and a variable width portion having a width gradually decreasing from the constant width portion to an end of the opening in a longitudinal direction.

The opening may be formed in an atypical shape.

### Advantageous Effects

According to an embodiment of the present disclosure, the width of the opening is formed to gradually change, and thus, the flow rate of the fluid may be uniformly distributed. Accordingly, fiber breakage of the hollow fiber membrane may be prevented, and humidification performance and flow durability may be improved.

### Description of Drawings

FIG. 1 is an exploded perspective view showing a hollow fiber membrane module according to a first embodiment of the present disclosure.
FIG. 2 is a perspective view showing a hollow fiber membrane cartridge according to the first embodiment of the present disclosure.
FIG. 3 is a front view showing a hollow fiber membrane cartridge according to a second embodiment of the present disclosure.
FIG. 4 is a front view showing a hollow fiber membrane cartridge according to a third embodiment of the present disclosure.
FIG. 5 is a front view showing a hollow fiber membrane cartridge according to a fourth embodiment of the present disclosure.
FIG. 6 is a front view showing a hollow fiber membrane cartridge according to a fifth embodiment of the present disclosure.
FIG. 7 is a front view showing a hollow fiber membrane cartridge according to a sixth embodiment of the present disclosure.
FIG. 8 is a front view showing a hollow fiber membrane cartridge according to a seventh embodiment of the present disclosure.
FIG. 9 is a front view showing a hollow fiber membrane cartridge according to an eighth embodiment of the present disclosure.
FIG. 10 is a front view showing a hollow fiber membrane cartridge according to a ninth embodiment of the present disclosure.

### Mode for Invention

The present disclosure may be changed in various modifications and may have various embodiments, wherein specific embodiments will be illustrated and described in detail in the following detailed description. However, the present disclosure is not limited to the specific embodiments, and it should be understood that the present disclosure includes all modifications, equivalents, or substitutions included in the idea and technical scope of the present disclosure.

The terms used in the present disclosure are provided only to describe the specific embodiments, and do not limit the present disclosure. Singular forms are intended to include plural forms as well, unless the context clearly indicates otherwise. In the present disclosure, it should be understood that the terms "includes," "has," etc. specify the presence of features, numbers, steps, operations, elements, components, or combinations thereof described in the specification, but do not preclude the presence or addition of one or more other features, numbers, steps, operations, elements, components, or combinations thereof.

Hereinafter, a hollow fiber membrane module according to a first embodiment of the present disclosure will be described with reference to the drawings.

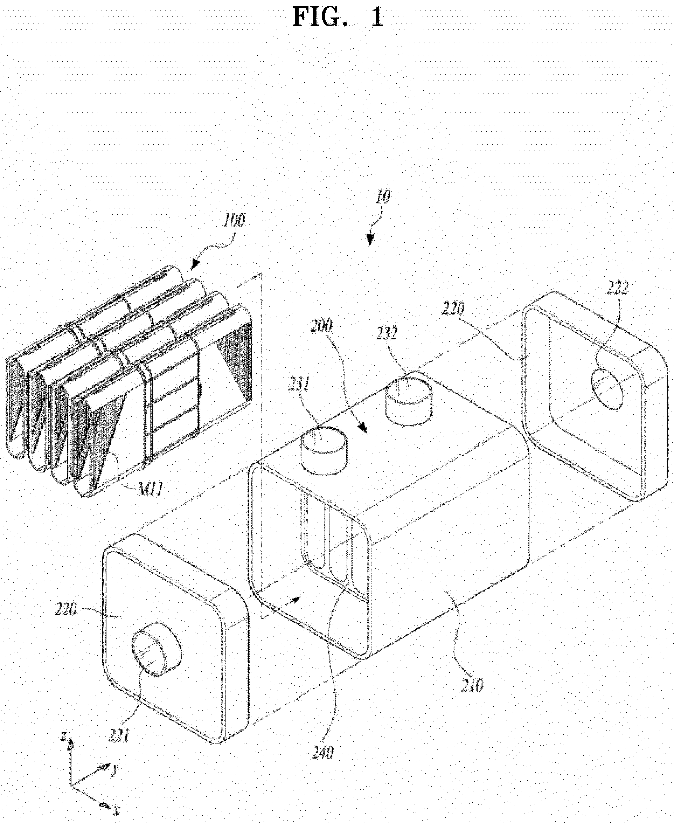

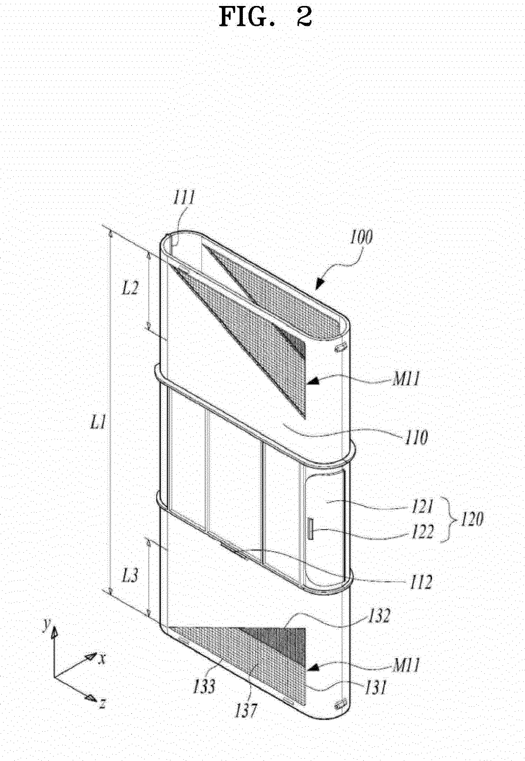

FIG. 1 is an exploded perspective view showing a hollow fiber membrane module according to a first embodiment of the present disclosure. FIG. 2 is a perspective view showing a hollow fiber membrane cartridge according to the first embodiment of the present disclosure.

Referring to FIGS. 1 and 2, a hollow fiber membrane module 10 according to the present embodiment includes a housing unit 200 and a plurality of hollow fiber membrane cartridges 100 (hereinafter also referred to as 'cartridges') installed inside the housing unit 200 and in which a plurality of hollow fiber membranes are accommodated.

The housing unit 200 forms the external appearance of the hollow fiber membrane module 10. The housing unit 200 may include a housing body 110 and housing caps 120, which may be integrally coupled to each other. Each of the housing body 110 and the housing caps 120 may be made of hard plastic, such as polycarbonate, or metal.

In addition, a cross-sectional shape of each of the housing body 110 and the housing caps 120 in a width direction may be a polygon or circle. The polygon may be a rectangle, a square, a trapezoid, a parallelogram, a pentagon, or a hexagon, and corners of the polygon may be round. In addition, the circle may be an oval.

A second fluid inlet 231 through which a second fluid is introduced and a second fluid outlet 232 through which the second fluid is discharged are formed on one surface of the housing body 210. The plurality of hollow fiber membrane cartridges 100, in which the plurality of hollow fiber membranes configured to allow moisture to selectively pass therethrough are accommodated, are disposed inside the housing unit 200. Here, each of the hollow fiber membranes is made of a known material, and thus, a detailed description thereof is omitted herein.

Potting units (not shown) to bind the hollow fiber membranes and to fill gaps between the hollow fiber membranes are formed at both ends of each of the hollow fiber membrane cartridges 100. As a result, the both ends of each of the hollow fiber membrane cartridges 100 are blocked by the potting units, whereby a flow channel configured to allow the second fluid to pass therethrough is formed in each of the hollow fiber membrane cartridges 100. Each of the potting units is made of a known material, and thus, a detailed description thereof is omitted herein.

Meanwhile, the housing caps 220 are coupled to both ends of the housing body 210. A first fluid inlet 221 and a first fluid outlet 222 are respectively formed in the housing caps 220. A first fluid introduced through the first fluid inlet 221 formed in one of the housing caps 220 is introduced into each of the hollow fiber membranes, flows through an inner pipeline of each of the hollow fiber membranes, flows out of each of the hollow fiber membranes, and is discharged outside through the first fluid outlet 222 formed in the other housing cap 220.

A plurality of insertion holes 240 into which the hollow fiber membrane cartridges 100 may be mounted are formed in the housing unit 200, and the hollow fiber membrane cartridges 100 are inserted into the respective insertion holes 240.

The hollow fiber membrane cartridge 100 may be in a parallelepiped shape rounded at both side surfaces thereof. In addition, the hollow fiber membrane cartridge 100 may have a curved surface facing the second fluid inlet 231 and the second fluid outlet 232, and have a flat surface connecting two curved surfaces. However, the present disclosure is not limited thereto, and the hollow fiber membrane cartridge may have a cylindrical shape having a circular cross section or an oval cylindrical shape having an oval cross section.

The hollow fiber membrane cartridge 100 is preferably made of a material that has high dimensional stability, high resin flowability, and high resistance to thermal deformation. Examples of such a material include acrylonitrile-butadiene-styrene resin (ABS) and nylon.

Openings M11 are formed in both edges of the hollow fiber membrane cartridge 100 in a longitudinal direction. The openings M11 may be formed in both facing surfaces of the hollow fiber membrane cartridge 100, and may be formed to extend in a width direction (z-axis direction) of the hollow fiber membrane cartridge 100. The openings M 11 may be formed in a surface disposed parallel to a direction in which the second fluid is introduced. However, the present disclosure is not limited thereto.

The opening M11 disposed on one side allows a humid second fluid introduced through a second fluid inlet 231 which is described below to be introduced into the hollow fiber membrane cartridge 100 such that moisture exchange is performed between the second fluid and a dry first fluid introduced through a first fluid inlet 221 in the hollow fiber membrane cartridge 100 The opening M11 disposed on the other side discharges the second fluid in which moisture exchange is performed.

The openings M11 may prevent part of the introduced second fluid from directly colliding with the hollow fiber membranes disposed inside the hollow fiber membrane cartridge 100, thereby preventing damage to the hollow fiber membranes.

The opening M11 according to the present embodiment may have a length L11 and a width W11, and the length L11 or width W11 of the opening M11 may gradually change. A first portion having a relatively small inflow flow rate of the second fluid and a second portion having a relatively greater inflow flow rate of the second fluid per unit area than that of the first portion may be formed in the opening M11, and the width W11 of the second portion may be less than the width W11 of the first portion. Here, the second portion may be a portion adjacent to the first fluid inlet 221, may be a central portion of the opening M11 in the longitudinal direction (y-axis direction), and may be a portion positioned on the opposite side of the first fluid inlet 221.

To this end, the opening M11 may be formed such that the width W11 gradually decreases from one end of the opening M11 to the other end thereof in the longitudinal direction (z-axis direction). The opening M11 is illustrated as having a triangular shape in the present embodiment, but the present disclosure is not limited thereto, and the opening M11 may have various shapes of the width W11 that changes such as a circular shape, an oval shape, and a polygonal shape.

In addition, the opening M11 may be formed such that the length L11 gradually decreases from one end of the opening M11 to the other end thereof in the width direction (y-axis direction). The opening M11 may be formed such that the length L11 gradually decreases from the outside of the hollow fiber membrane cartridge 100 to the inside thereof in the longitudinal direction (y-axis direction).

On the other hand, the opening M11 may include a reference line 131 parallel to the longitudinal direction of the hollow fiber membrane cartridge 100, an inclined line 132 inclined to the reference line 131, and a connection line 133 perpendicular to the reference line 131.

The reference line 131 may be parallel to the longitudinal direction (y-axis direction) of the hollow fiber membrane cartridge 100 and may be disposed at an upper portion of the opening M11. The inclined line 132 may connect the reference line 131 and the connection line 133.

A mesh net 137 for uniform distribution of the second fluid may be installed in the opening M11. However, the present disclosure is not limited thereto, and a plurality of windows may be installed in the opening M11.

As in the present embodiment, when the length L11 and the width W11 of the opening M11 are formed to gradually change, the width W11 of the opening M11 is reduced in a part where the flow rate is high, and the width W11 of the opening M11 is increased in a part where the flow rate is low, thereby achieving uniform humidification. In addition, the inclined line 132 may induce flow in an inclined direction with respect to the hollow fiber membrane cartridge 100, thereby preventing damage to the hollow fiber membrane and achieving uniform humidification.

Next, a moisture exchange process between the first fluid and the second fluid in the hollow fiber membrane module 10 configured as described above is described. In the description below, the first fluid may be a low-humidity fluid, and the second fluid may be a high-humidity fluid. Alternatively, the second fluid may be a low-humidity fluid, and the first fluid may be a high-humidity fluid.

The first fluid is supplied into the housing unit 200 and the hollow fiber membrane cartridge 100 through the first fluid inlet 221 formed in one of the housing caps 220, flows through the hollow fiber membranes, and is discharged out of the hollow fiber membrane module 10 through the first fluid outlet 122 formed in the other housing cap 220 Meanwhile, the first fluid may flow in a direction in which the first fluid is introduced into the first fluid outlet 222 and is discharged through the first fluid inlet 221.

The second fluid is supplied to the housing body 210 through the second fluid inlet 231 of the housing body 210, flows outside the hollow fiber membranes through the openings M11 of the hollow fiber membrane cartridge 100, is discharged to the housing body 210 through the openings M11 of the hollow fiber membrane cartridge 100, and is discharged outside through the second fluid outlet 132 of the housing body 210.

Meanwhile, the second fluid may also flow in a direction in which the second fluid is introduced into the second fluid outlet 232 and is discharged through the second fluid inlet 231. That is, the first fluid and the second fluid may flow in opposite directions or in the same direction. The first fluid and the second fluid flow inside and outside the hollow fiber membrane, respectively, and exchange a substance such as moisture or heat through the hollow fiber membrane.

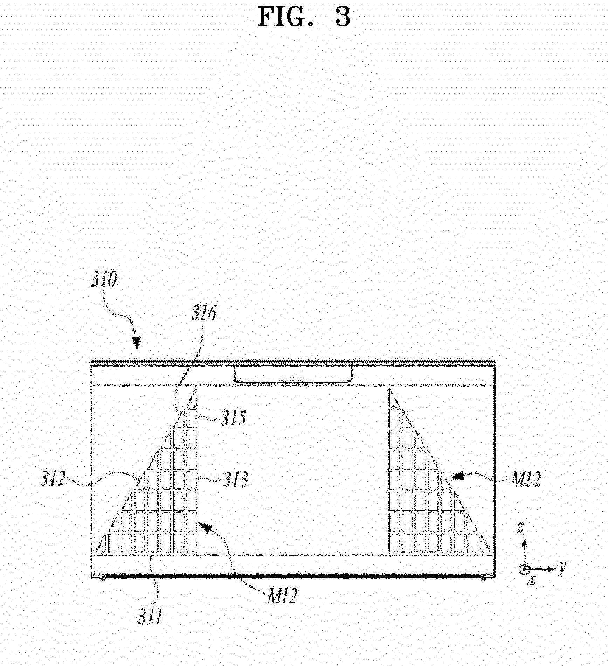

Hereinafter, a hollow fiber membrane cartridge according to a second embodiment of the present disclosure is described. FIG. 3 is a front view showing a hollow fiber membrane cartridge according to a second embodiment of the present disclosure.

Referring to FIG. 3, a hollow fiber membrane cartridge 310 according to the second embodiment has the same structure as the hollow fiber membrane cartridge according to the first embodiment except for an opening M12, and thus, redundant descriptions of the same configurations are omitted.

The opening M12 may have a length L12 and a width W12, and the width W12 may gradually decrease from one end of the opening M12 to the other end thereof in the longitudinal direction (z-axis direction). The opening M12 may be formed such that the width thereof gradually decreases toward a second fluid inlet and a second fluid outlet.

The flow rate of the second fluid introduced into the opening M12 is not uniform, and the opening M12 may include a first portion into which the second fluid is introduced at a high speed and a portion into which the second fluid is introduced at a slower speed than that of the first portion. The width of the first portion is smaller than the width of the second portion, and accordingly, the second fluid may be uniformly supplied into the hollow fiber membrane cartridge 310.

Depending on conditions, a portion adjacent to the second fluid inlet and the second fluid outlet may show a relatively faster flow rate distribution than other portions. When the width W12 of the opening M12 gradually decreases toward the second fluid inlet and the second fluid outlet, not only the second fluid may be uniformly supplied and discharged, but also damage to the hollow fiber membrane may be stably prevented.

The opening M12 according to the present embodiment may include a reference line 311 parallel to the longitudinal direction (y-axis direction) of the hollow fiber membrane cartridge 310, an inclined line 312formed inclined to the reference line 311, and a connection line 313 perpendicular to the reference line 311.

The reference line 311 may be parallel to the longitudinal direction (y-axis direction) of the hollow fiber membrane cartridge 310 and disposed at a lower portion of the opening M12, and the inclined line 312 may connect the reference line 311 to the connection line 313.

Meanwhile, a plurality of windows may be formed in the opening M12, and the opening M12 may include a first window 315 formed in a square shape and a second window 316 formed in a triangular shape. However, the present disclosure is not limited thereto, and the window may be formed in various shapes such as a polygonal shape and a circular shape.

The second window 316 may contact the inclined line 312, and the first window 315 may contact the reference line 311 and the connection line 313 or may be disposed inside.

According to the present embodiment, because the width W12 of the opening M12 gradually decreases toward the second fluid inlet and the second fluid outlet, not only the second fluid may be uniformly supplied, but also damage to the hollow fiber membrane may be stably prevented. In addition, because the first window 315 and the second window 316 are formed in the opening M12, the flow may be uniform, and the fluid may be stably moved.

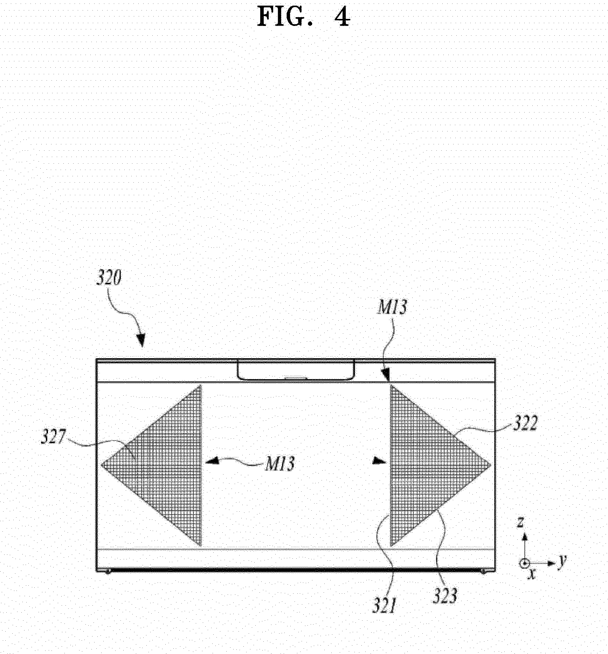

Hereinafter, a hollow fiber membrane cartridge according to a third embodiment of the present disclosure is described. FIG. 4 is a front view showing a hollow fiber membrane cartridge according to a third embodiment of the present disclosure.

Referring to FIG. 4, because a hollow fiber membrane cartridge 320 according to the third embodiment has the same structure as the hollow fiber membrane cartridge according to the first embodiment except for an opening M13, and thus, redundant descriptions of the same configurations are omitted.

The opening M13 may be formed such that a width W13 gradually decreases from the center of the opening M13 to the outside thereof in the longitudinal direction (z-axis direction). In addition, the opening M13 may be formed such that a length L13 gradually decreases from one end of the opening M13 to the other end thereof in the width direction (y-axis direction). In addition, the opening M13 may be formed such that the length L13 gradually decreases from the outside of the hollow fiber membrane cartridge 320 to the inside thereof in the longitudinal direction (y-axis direction).

The opening M13 according to the present embodiment may include a reference line 321 perpendicular to the longitudinal direction (y-axis direction) of the hollow fiber membrane cartridge 320, a first inclined line 322 formed inclined to the reference line 321, and a second inclined line 323 connecting the reference line 321 to the first inclined line 322 and formed inclined to the reference line 321. The reference line 321 may be disposed at one side end of the opening M13. A mesh net 327 or a plurality of windows may be installed in the opening M13.

Depending on conditions, a portion adjacent to both ends of the opening M13 in the longitudinal direction may show a relatively faster flow rate distribution than other portions. As in the third embodiment, when the width W13 of the opening M13 gradually decreases from the center of the opening M13 to the outside thereof in the longitudinal direction, not only the second fluid may be uniformly supplied and discharged, but also damage to the hollow fiber membrane may be stably prevented.

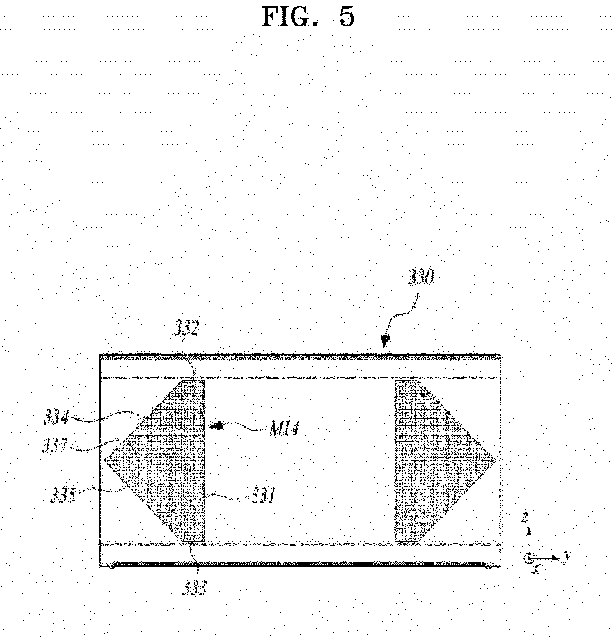

Hereinafter, a hollow fiber membrane cartridge according to a fourth embodiment of the present disclosure is described. FIG. 5 is a front view showing a hollow fiber membrane cartridge according to a fourth embodiment of the present disclosure.

Referring to FIG. 5, because a hollow fiber membrane cartridge 330 according to the fourth embodiment has the same structure as the hollow fiber membrane cartridge according to the first embodiment except for an opening M14, and thus, redundant descriptions of the same configurations are omitted.

The opening M14 according to the fourth embodiment may be formed such that a width W14 gradually decreases from the center of the opening M14 to the outside thereof in the longitudinal direction (z-axis direction). The opening M14 may be formed such that a length L14 gradually decreases from one end of the opening M14 to the other end thereof in the width direction (y-axis direction). In addition, the opening M14 may be formed such that the length L14 gradually decreases from the outside of the hollow fiber membrane cartridge 330 to the inside thereof in the longitudinal direction (y-axis direction).

In addition, the opening M14 may include a reference line 331 perpendicular to the longitudinal direction (y-axis direction) of the hollow fiber membrane cartridge 330, a first connection line 332 coupled to one end of the reference line 331 in the longitudinal direction and perpendicular to the reference line 331, a second connection line 333 coupled to the other end of the reference line 331 in the longitudinal direction, spaced apart from the first connection line 332, and connected to in parallel the first connection line 332, a first inclined line 334 obliquely extending from the first connection line 332, and a second inclined line 335 connecting the first inclined line 334 to the second connection line 333. A mesh 337 or a plurality of windows may be installed in the opening M14.

A portion of the opening M14 formed by the first connection line 332 and the second connection line 333 has the length L14 that is uniform, and a portion of the opening M14 formed by the first inclined line 334 and the second inclined line 335 has the length L14 that gradually changes.

As in the fourth embodiment, when the width W14 of the opening M14 gradually decreases from the center of the opening M14 to the outside thereof in the longitudinal direction, in the case where a portion adjacent to both ends of the opening M14 in the longitudinal direction has a fast flow rate, not only a second fluid may be uniformly supplied and discharged, but also damage to a hollow fiber membrane may be stably prevented.

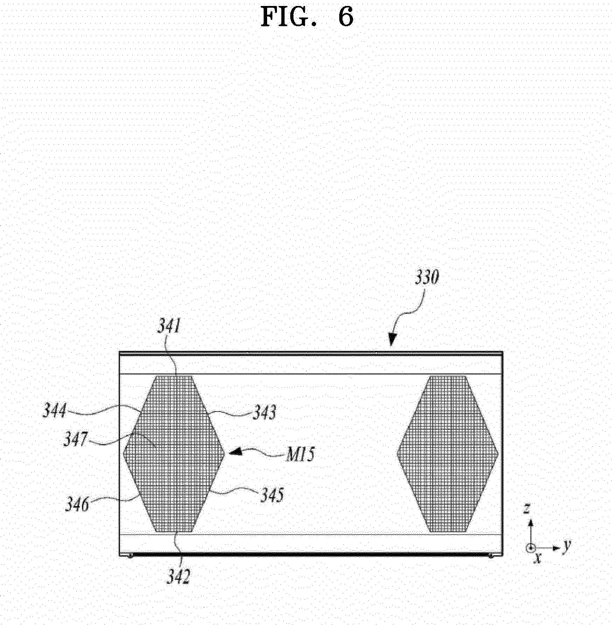

Hereinafter, a hollow fiber membrane cartridge according to a fifth embodiment of the present disclosure is described. FIG. 6 is a front view showing a hollow fiber membrane cartridge according to a fifth embodiment of the present disclosure.

Referring to FIG. 6, because a hollow fiber membrane cartridge 340 according to the fifth embodiment has the same structure as the hollow fiber membrane cartridge according to the first embodiment except for an opening M15, and thus, redundant descriptions of the same configurations are omitted.

The opening M15 according to the fifth embodiment may be formed such that a width W15 gradually decreases from the center of the opening M15 to the outside thereof in the longitudinal direction (z-axis direction) and such that a length L15 may gradually decrease from the center of the opening M15 to the outside thereof in the width direction (y-axis direction).

In addition, the opening M15 may include a first reference line 341 disposed parallel to the longitudinal direction (y-axis direction) of the hollow fiber membrane cartridge 340, a second reference line 342 spaced apart from the first reference line 341 and disposed parallel to the first reference line 341, a first inclined line 343 obliquely connected to one end of the first reference line 341 in the longitudinal direction, a second inclined line 344 obliquely connected to the other end of the first reference line 341 in the longitudinal direction, a third inclined line 345 connecting the first inclined line 343 to the second inclined line 344, and a fourth inclined line 346 connecting the second inclined line 344 to the second reference line 342. A mesh 347 for uniform distribution of a second fluid or a plurality of windows may be installed in the opening M15.

A portion of the opening M15 formed by the first reference line 341 and the second reference line 342 has the length L15 that is uniform, and a portion of the opening M15 formed by the first inclined line 343 and the second inclined line 344 and a portion of the opening M15 formed by the third inclined line 345 and the fourth inclined line 346 have the length L15 that gradually changes.

As in the fifth embodiment, when the width W15 of the opening M15 gradually decreases from the center of the opening M15 to the outside thereof in the longitudinal direction, in the case where a portion adjacent to both ends of the opening M15 in the longitudinal direction has a fast flow rate, not only the second fluid may be uniformly supplied and discharged, but also damage to a hollow fiber membrane may be stably prevented.

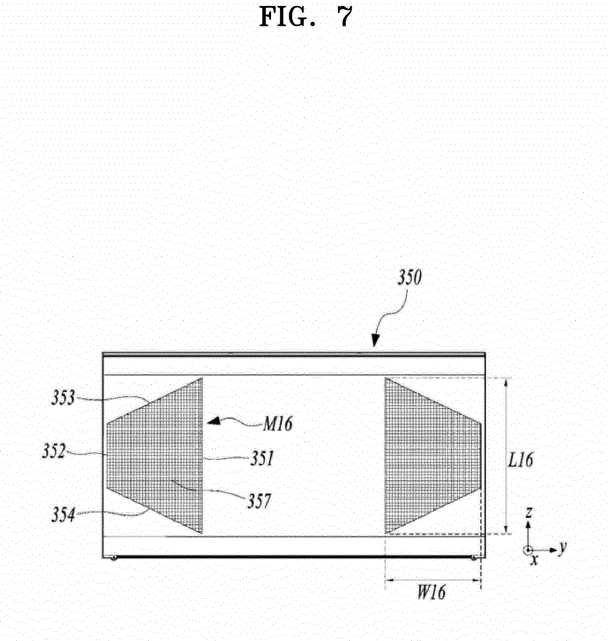

Hereinafter, a hollow fiber membrane cartridge according to a sixth embodiment of the present disclosure is described. FIG. 7 is a front view showing a hollow fiber membrane cartridge according to a sixth embodiment of the present disclosure.

Referring to FIG. 7, because a hollow fiber membrane cartridge 350 according to the sixth embodiment has the same structure as the hollow fiber membrane cartridge according to the first embodiment except for an opening M16, and thus, redundant descriptions of the same configurations are omitted.

The opening M16 according to the present embodiment may be formed such that a width W16 gradually decreases from the center of the opening M16 to the outside thereof in the longitudinal direction (z-axis direction). The opening M16may be formed at a central portion of the opening M16 in the longitudinal direction, and may include a portion having a uniform width and a portion having a width gradually decreasing to the outside. In addition, the opening M16 may be formed such that a length L16 gradually increases from one end of the opening M16 to the other end thereof in the width direction (y-axis direction).

The opening M16 may include a first reference line 351 disposed perpendicular to the longitudinal direction (y-axis direction) of the hollow fiber membrane cartridge 350, a second reference line 352 spaced apart from the first reference line 351 and disposed parallel to the first reference line 351, a first inclined line 353 obliquely connected to one end of the first reference line 351 in the longitudinal direction, and a second inclined line 354 obliquely connected to the other end of the first reference line 351 in the longitudinal direction. The first inclined line 353 and the second inclined line 354 are connected to the first reference line 351 and the second reference line 352. A mesh net 357 or a plurality of windows may be installed in the opening M16.

A portion of the opening M16 formed by the first reference line 351 and the second reference line 352 has the width W16 that is uniform, and a portion of the opening M16 formed by the first inclined line 353 and the second inclined line 354 has the width W16 that gradually changes.

As in the sixth embodiment, when the width W16 of the opening M16 gradually decreases from the center of the opening M16 to the outside thereof in the length direction, in the case where a portion adjacent to both ends of the opening M16 in the longitudinal direction has a fast flow rate, not only a second fluid may be uniformly supplied and discharged, but also damage to a hollow fiber membrane may be stably prevented.

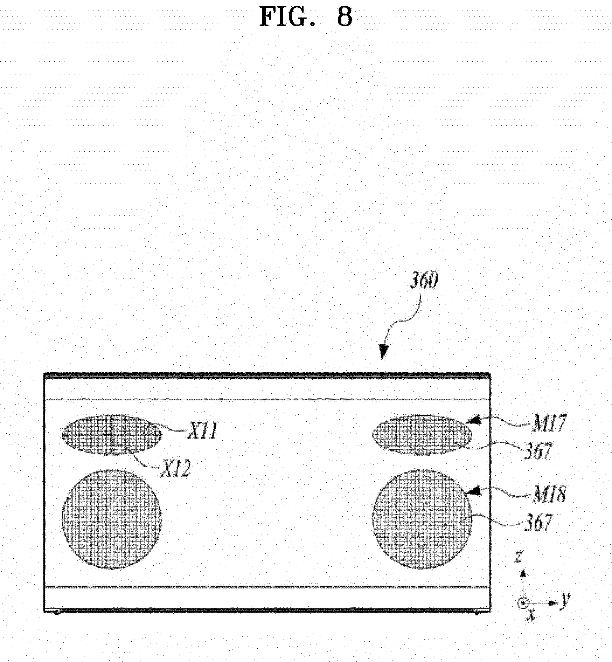

Hereinafter, a hollow fiber membrane cartridge according to a seventh embodiment of the present disclosure is described. FIG. 8 is a front view showing a hollow fiber membrane cartridge according to a seventh embodiment of the present disclosure.

Referring to FIG. 8, because a hollow fiber membrane cartridge 360 according to the seventh embodiment has the same structure as the hollow fiber membrane cartridge according to the first embodiment except for a first opening M17 and a second opening M18, and thus, redundant descriptions of the same configurations are omitted.

The first openings M17 and the second openings M18 are formed in side surfaces of the hollow fiber membrane cartridge 360 according to the present embodiment, and the two first openings M17 and the two second opening M18 are spaced apart from each other in the longitudinal direction (y-axis direction) of the hollow fiber membrane cartridge 360.

The first opening M17 and the second opening M18 may be spaced apart from each other in the width direction (z-axis direction) of the hollow fiber membrane cartridge 360. The first opening M17 may be disposed closer to a second fluid inlet and a second fluid outlet than the second opening M18. In addition, a mesh net 367 or a plurality of windows may be installed in the first opening M17 and the second opening M18.

The first opening M17 and the second opening M18 may be formed such that widths of the first opening M17 and the second opening M18 gradually decrease from the center thereof to the outside thereof. The first opening M17 may have an oval shape, and the second opening M18 may have a circular shape. However, the present disclosure is not limited thereto, and the first opening M17 and the second opening M18 may be formed in various shapes of a width that changes such as a circular shape, an oval shape, and a polygonal shape.

In addition, a major axis X11 of the first opening M17 may be formed to extend in the longitudinal direction (y-axis direction) of the hollow fiber membrane cartridge 360, and a minor axis X12 of the first opening M17 may be formed to extend in the width direction (z-axis direction) of the hollow fiber membrane cartridge 360.

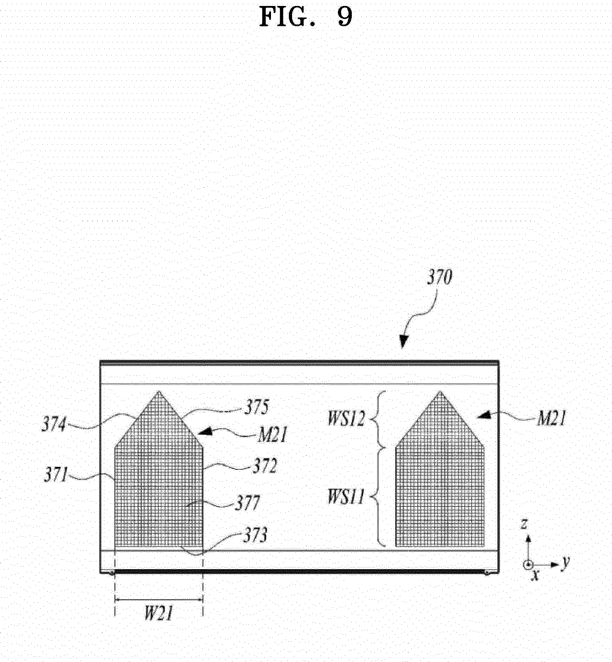

Hereinafter, a hollow fiber membrane cartridge according to an eighth embodiment of the present disclosure is described. FIG. 9 is a front view showing a hollow fiber membrane cartridge according to an eighth embodiment of the present disclosure.

Referring to FIG. 9, because a hollow fiber membrane cartridge 370 according to the eighth embodiment has the same structure as the hollow fiber membrane cartridge according to the first embodiment except for openings M21, and thus, redundant descriptions of the same configurations are omitted.

Each of the openings M21 according to the eighth embodiment may include a constant width portion WS11 having a width W210 that is uniform from one end of the opening M21 to the other end thereof in a longitudinal direction, and a variable width portion WS12 having a width gradually decreasing from the constant width portion WS11 to an end of the opening M21 in the longitudinal direction. In the present embodiment, the variable width portion WS12 is illustrated as being formed by a straight line, but the present disclosure is not limited thereto, and the variable width portion WS12 may be formed by a curved line.

In addition, the opening M21 may include a first reference line 371 perpendicular to the longitudinal direction (y-axis direction) of the hollow fiber membrane cartridge 370, a second reference line 372 spaced apart from the first reference line 371 and disposed parallel to the first reference line 371, a connection line 373 connecting one end of the first reference line 371 to one end of the second reference line 372 in the longitudinal direction, a first inclined line 374 obliquely extending from the other end of the first reference line 371, and a second inclined line 375 obliquely extending from the other end of the second reference line 372. Here, the first inclined line 374 and the second inclined line 375 are connected to each other. A mesh net 377 or a plurality of windows may be installed in the opening M21.

A variable width portion WS12 may be formed by the first inclined line 374 and the second inclined line 375, and may be formed such that a width of the variable width portion WS12 gradually decreases toward a second fluid inlet or a second fluid outlet. Accordingly, damage to a hollow fiber membrane may be stably prevented.

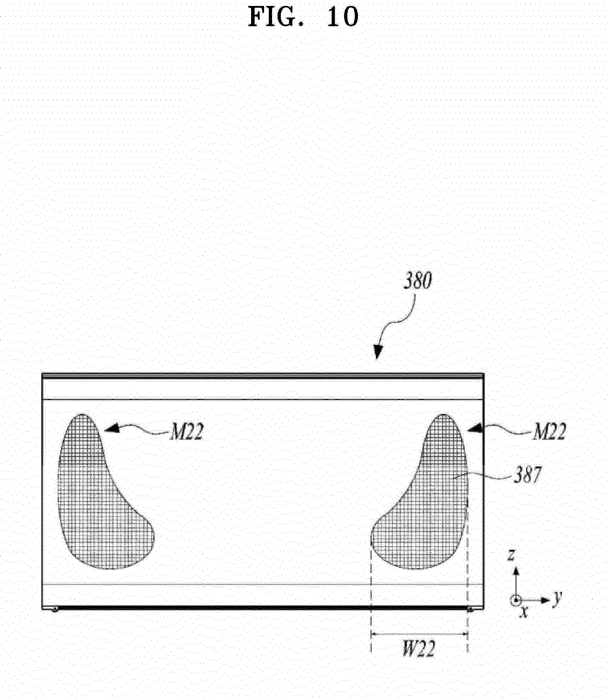

Hereinafter, a hollow fiber membrane cartridge according to a ninth embodiment of the present disclosure is described. FIG. 10 is a front view showing a hollow fiber membrane cartridge according to a ninth embodiment of the present disclosure.

Referring to FIG. 10, a hollow fiber membrane cartridge 380 according to the ninth embodiment has the same structure as the hollow fiber membrane cartridge according to the first embodiment except for an opening M22, and thus, redundant descriptions of the same configurations are omitted.

The opening M22 according to the ninth embodiment may be formed such that a width W22 gradually increases or decreases from one end of the opening M22 to the other end thereof in the longitudinal direction (z-axis direction). In addition, the opening M22 may be formed such that the width W22 gradually decreases from the center of the opening M22 to the outside thereof in the longitudinal direction (z-axis direction). The opening M22 may be formed in an atypical shape in which a plurality of curved lines or straight lines are connected. In addition, a mesh net 387 or a plurality of windows may be installed in the opening M22.

Although embodiments of the present disclosure have been described above, it will be apparent to an ordinary skill in the art to which the present disclosure pertains that the present disclosure may be variously modified and altered through addition, change, deletion, or supplement of components without departing from the idea of the present disclosure recited in the following claims and that such modifications and alterations fall within the scope of right of the present disclosure.

## Claims

1. A hollow fiber membrane cartridge in which a hollow fiber membrane configured to allow a first fluid and a second fluid to perform moisture exchange is accommodated, wherein the first fluid flows inside the hollow fiber membrane, the second fluid introduced from outside flows outside the hollow fiber membrane,
an opening through which the second fluid is introduced or discharged is formed in the hollow fiber membrane cartridge,
a first portion into which the second fluid is introduced and a second portion having a greater inflow flow rate of the second fluid per unit area than an inflow flow rate of the first portion are formed in the opening, and a width of the second portion is less than a width of the first portion.

2. The hollow fiber membrane cartridge of claim 1, wherein the opening has a width and a length, and the width of the opening gradually changes.

3. The hollow fiber membrane cartridge of claim 2, wherein the opening is formed such that the width of the opening gradually decreases from one end of the opening to another end thereof in a longitudinal direction.

4. The hollow fiber membrane cartridge of claim 2, wherein the opening is formed such that the width of the opening gradually decreases from a center of the opening to outside thereof in a longitudinal direction.

5. The hollow fiber membrane cartridge of claim 2, wherein the opening includes a portion having a uniform width and a portion having a width that gradually changes.

6. The hollow fiber membrane cartridge of claim 1, wherein a plurality of windows are formed in the opening.

7. The hollow fiber membrane cartridge of claim 1, wherein a mesh net is installed in the opening.

8. The hollow fiber membrane cartridge of claim 1, wherein a plurality of openings spaced apart from each other in a width direction of the hollow fiber membrane cartridge are formed in the hollow fiber membrane cartridge, and at least one of the plurality of openings is formed in a circular shape or an oval shape.

9. The hollow fiber membrane cartridge of claim 1, wherein the opening includes a constant width portion having a width that is uniform and a variable width portion having a width gradually decreasing from the constant width portion to an end of the opening in a longitudinal direction.

10. The hollow fiber membrane cartridge of claim 1, wherein the opening is formed in an atypical shape.

11. A hollow fiber membrane module comprising:
a housing unit comprising a first fluid inlet, a first fluid outlet, a second fluid inlet, and a second fluid outlet; and
a plurality of hollow fiber membrane cartridges disposed inside the housing unit and in which hollow fiber membranes are accommodated,
wherein an opening through which the second fluid is introduced or discharged are formed in each of the plurality of hollow fiber membrane cartridges, and
a first portion and a second portion having a greater inflow flow rate of the second fluid per unit area than an inflow flow rate of the first portion are formed in the opening, and a width of the second portion is less than a width of the first portion.

12. The hollow fiber membrane module of claim 11, wherein the opening has a width and a length, and the width of the opening gradually changes.

13. The hollow fiber membrane module of claim 12, wherein the opening is formed such that the width of the opening gradually decreases from one end of the opening to another end thereof in a longitudinal direction.

14. The hollow fiber membrane module of claim 12, wherein the opening is formed such that the width of the opening gradually decreases from a center of the opening to outside thereof in a longitudinal direction.

15. The hollow fibermembrane module of claim 11, wherein the opening includes a portion having a uniform width and a portion having a width that gradually changes.

16. The hollow fiber membrane module of claim 11, wherein the opening is formed such that a width of the opening gradually decreases toward the second fluid inlet or the second fluid outlet.

17. The hollow fiber membrane module of claim 11, wherein a plurality of openings spaced apart from each other in a width direction of the hollow fiber membrane cartridge are formed in the hollow fiber membrane cartridge, and at least one of the plurality of openings is formed in a circular shape or an oval shape.

18. The hollow fiber membrane module of claim 11, wherein the opening includes a constant width portion having a width that is uniform and a variable width portion having a width gradually decreasing from the constant width portion to an end of the opening in a longitudinal direction.

19. The hollow fiber membrane module of claim 11, wherein the opening is formed in an atypical shape.
